# EUROPÄISCHE PATENTANMELDUNG

(11) **EP 4 257 430 A1**
(43) Veröffentlichungstag der Anmeldung: **11.10.2023**
(21) Anmeldenummer: 22166578.9
(22) Anmeldetag: 04.04.2022
(51) Int. Cl.: B60R 5/04, B60R 7/04, B60R 13/02

(54) **HECKKLAPPENMODUL**

(71) Anmelder: Cless, Ulrich, 72622 Nuertingen (DE); Hofele, Winfried, 72587 Roermerstein-Donnstetten (DE)
(72) Erfinder: Cless, Ulrich, 72622 Nuertingen (DE); Hofele, Winfried, 72587 Roermerstein-Donnstetten (DE)
(74) Vertreter: Nordmeyer, Philipp Werner

(57) **Zusammenfassung**

Die vorliegende Erfindung betrifft ein Anbaumodul (10) für eine Heckklappe (100) eines Fahrzeugs, insbesondere eines Campingfahrzeugs, aufweisend einen Rahmen (12), der fahrzeuginnenseitig an der Heckklappe (100) in einer Montageebene (14) befestigbar ist und einen Stauraum (16) zumindest teilweise umschließt. Der Rahmen (12) ist dabei ausgebildet und eingerichtet, den Stauraum (16) in ein erstes Fach (20) und ein zweites Fach (22) zu unterteilen. Die vorliegende Erfindung betrifft weiterhin eine Heckklappe (100) mit einem solchen Anbaumodul (10).

## Beschreibung

### Technisches Gebiet

Die vorliegende Erfindung betrifft ein Anbaumodul für eine Heckklappe eines Fahrzeugs, insbesondere eines Campingfahrzeugs, aufweisend einen Rahmen, der fahrzeuginnenseitig an der Heckklappe in einer Montageebene befestigbar ist und einen Stauraum zumindest teilweise umschließt.

### Stand der Technik

Der Bedarf an Campingfahrzeugen wächst kontinuierlich an. Entsprechend wächst der Bedarf, Kraftfahrzeuge so umzubauen, dass sie in möglichst einfacher Weise zu möglichst praktikablen Campingfahrzeugen genutzt werden können.

Mit einher geht dabei der Grundgedanke, dass Campingutensilien grundsätzlich im Innen- oder Außenraum des Campingfahrzeugs effektiv zu verstauen sind, ohne dabei die einzelnen Funktionen des Campingfahrzeugs einzuschränken. Dasselbe gilt beispielsweise auch für die Unterbringung von Werkzeugen oder anderem Gerät in Fahrzeugen.

Vor diesem Hintergrund sind etwa Anbaumodule für Heckklappen eines Fahrzeugs bekannt, die einen fahrzeuginnenseitig an der Heckklappe befestigbar sind und ein Stauraumfach zur Verfügung stellen.

Bekannt sind beispielsweise Lösungen, die zwei Stofftaschen als Aufbewahrungsort für zwei Stühle vorsehen. Nachteilig bei solchen Lösungen ist jedoch, dass sich das Auf- und Abrüsten des Campingfahrzeugs umständlich gestalten kann und die Stofftaschen weiterhin anfällig sind für Verschmutzung, Beschädigung und/oder Verlust.

### Offenbarung der Erfindung

Ausgehend von dem bekannten Stand der Technik ist es eine Aufgabe der vorliegenden Offenbarung, die aufgezeigten Probleme zu beseitigen. Es ist eine Aufgabe, ein gattungsgemäßes Anbaumodul der im Anfang genannten Art zu schaffen, die zumindest einfacher auf- und abzurüsten ist. Es ist insbesondere eine Aufgabe der vorliegenden Erfindung, ein Anbaumodul für eine Heckklappe eines Fahrzeugs bereitzustellen, mit der auf eine einfache, kontrollierte, sichere und kostengünstige Weise Campingutensilien darin verstaut werden können.

Die Aufgabe wird durch ein Anbaumodul mit den Merkmalen des Anspruchs 1 gelöst. Die Aufgabe der Erfindung wird weiterhin durch eine Heckklappe mit den Merkmalen gemäß Anspruch 15 gelöst. Vorteilhafte Weiterbildungen ergeben sich aus den entsprechenden Unteransprüchen, der Beschreibung und den Figuren.

Erfindungsgemäß ist der Rahmen ausgebildet und eingerichtet, den Stauraum in ein erstes Fach und ein zweites Fach zu unterteilen. Unter einem Fach kann im Sinne der vorliegenden Offenbarung ein Teilbereich des gesamten Stauraums verstanden werden, der zumindest teilweise formschlüssig von einem anderen Teilbereich des gesamten Stauraums abgetrennt ist. Vorzugsweise kann der Stauraum in ein erstes starres Fach und ein zweites starres Fach unterteilt werden. Dadurch können Campingutensilien einfach und sicher positioniert in den jeweiligen Fächern gelagert werden.

Im Sinne der vorliegenden Offenbarung sind die Definitionen "erstes Fach" und "zweites Fach" grundsätzlich austauschbar. Im Sinne der vorliegenden Offenbarung sind unter den Begriffen "oben", "unten", "links" sowie "rechts" Richtungsangaben zu verstehen, wie sie sich aus einer Perspektive aus dem Inneren des Fahrzeugs mit Blick auf das Anbaumodul bei geschlossener Heckklappe ergeben.

Unter einem Fahrzeug kann im Sinne der vorliegenden Offenbarung ein Straßenfahrzeug verstanden werden, insbesondere ein Campingfahrzeug. Gleichwohl kann unter einem Fahrzeug im Sinne der vorliegenden Offenbarung auch ein Fahrzeug mit technischer oder sonstiger Ausrüstung für alle möglichen Zwecke verstanden werden. Weiterhin ist das Anbaumodul nicht für Anwendungen an Heckklappen beschränkt. Alternativ oder ergänzend kann das Anbaumodul für Seitentüren und/oder bewegbaren Chassis-Strukturen eines Fahrzeugs geeignet ausgebildet sein.

Im Sinne der vorliegenden Offenbarung bezieht sich der Begriff fahrzeuginnenseitig auf einen Zustand des Fahrzeugs, wie er üblicherweise während einer gewöhnlichen Fahrt des Fahrzeugs vorliegt. Im Falle eines Campingfahrzeugs ist dies etwa ein Zustand, in dem die Heckklappe geschlossen ist. In den meisten Anwendungsfällen in der Praxis ist die Montageebene als eine mehr oder weniger komplex geformte Fläche ausgebildet und daher nicht auf eine flache Ebene beschränkt. Beispielsweise kann die Montageebene durch die fahrzeuginnenseitige Oberflächentopologie der Heckklappe definiert sein.

Dadurch, dass der Rahmen ausgebildet und eingerichtet ist, den Stauraum in ein erstes Fach und in ein zweites Fach zu unterteilen, können Campingutensilien in dezidierten Fächern verstaut werden. Dadurch können diese einfach und unkompliziert in das Anbaumodul eingesetzt und entnommen werden. Weiterhin kann dadurch ein Anbaumodul für eine Heckklappe eines Fahrzeugs bereitgestellt werden, mit dem der auf eine einfache, kontrollierte, sichere und kostengünstige Weise Campingutensilien darin verstaut werden können. Weiterhin kann dadurch eine schnelle Montage/Demontage Anbaumoduls erzielt werden, in dem Campingutensilien bereits verstaut sein können. Durch die rahmengestützte Bauweise des Anbaumoduls, also dadurch, dass der Rahmen ausgebildet und eingerichtet ist, den Stauraum in ein erstes und ein zweites Fach zu unterteilen, können Campingutensilien jederzeit einfach und sicher positioniert gelagert werden, und zwar unabhängig davon, ob das Anbaumodul gerade an einer Heckklappe eines Fahrzeugs montiert ist oder nicht. Beispielsweise kann das Anbaumoduls durch diese rahmengestützte Bauweise als eine selbsttragende Rahmenstruktur für speziell vorgesehene Campingutensilien bereitgestellt werden, wodurch das Anbaumodul etwa in einer Garage, in einem Keller oder einem anderen Lagerort in verschiedenen Positionen abgestellt, gestapelt, und/oder gekippt werden kann.

Mit anderen Worten wird mittels eines solchen Rahmens erreicht, dass die zu verstauenden Gegenstände platzsparend in einer fest vorgegebenen Rahmenstruktur an Ort und Stelle gehalten bzw. verstaut werden können. Beispielsweise kann dadurch auf zusätzliche Halterungen, Taschen oder Gurte verzichtet werden. Weiterhin stellt ein Rahmen gemäß der vorliegenden Offenbarung eine sichere Hülle für die zu verstauenden Gegenstände bereit. Einerseits können dadurch die zu verstauenden Gegenstände vor unerwünschter Fremd- bzw. Krafteinwirkung geschützt werden. Andererseits können die Fahrzeuginsassen bei Beschleunigung des Fahrzeugs während der Fahrt vor lose im Anbaumodul verstauten Gegenständen geschützt werden.

In der vorliegenden Offenbarung wird ein Rahmen vorgeschlagen, der ausgebildet und eingerichtet ist, den Stauraum in ein erstes Fach und in ein zweites Fach zu unterteilen. Gleichwohl kann der Rahmen auch ausgebildet und eingerichtet sein, den Stauraum in weitere Fächer zu unterteilen, ohne von den dieser Offenbarung zugrundeliegenden Konzepten abzuweichen.

Gemäß einer vorteilhaften Weiterbildung der vorliegenden Offenbarung kann der Rahmen ein zum Stauraum hin ausgebildetes Wandprofil aufweisen, das ausgebildet und eingerichtet ist, das erste Fach als ein erstes Schubfach und/oder das zweite Fach als ein zweites Schubfach zu definieren.

Beispielsweise kann ein derartiges Wandprofil Schienen, Vorsprünge und/oder Leitbleche aufweisen, entlang der passend geformte Elemente geführt werden. Beispielsweise können die zu verstauenden Gegenstände so geformt sein, dass sie entlang des Wandprofils gleitend in das jeweilige Schubfach eingeführt werden können. Dadurch kann die Struktur des Anbaumoduls, die zum Halten der zu verstauenden Gegenstände notwendig ist, auf ein Wandprofil reduziert werden. Mit anderen Worten kann dadurch erreicht werden, dass die zu verstauenden Gegenstände selbst zu einer Außenstruktur des Anbaumoduls werden können.

Weiterbildend kann der Rahmen des Anbaumoduls so ausgebildet und eingerichtet sein, dass das erste Fach und das zweite Fach in Bezug auf die Montageebene aufeinander angeordnet sind. Damit kann gemeint sein, dass die beiden Fächer in aufeinander liegenden Ebenen angeordnet sein können, wobei etwa das erste Fach zwischen der Montageebene und dem zweiten Fach angeordnet ist.

Im Sinne der vorliegenden Offenbarung kann unter der Montageebene eine Ebene verstanden werden, in der das Anbaumodul an einer Heckklappe befestigt ist. Die Positionsangabe "aufeinander" kann beispielsweise eine räumliche Schichtung der Fächer entlang der z-Achse eines kartesischen Relativsystems bedeuten, dessen x, y-Achsen etwa in einer Ebene einer fahrzeuginnenseitigen Oberfläche einer Heckklappe angeordnet sind. Beispielsweise kann "aufeinander" so verstanden werden, dass ein über einem anderen Fach angeordnetes Fach weiter von der Montageebene entfernt ist als das darunter angeordnete Fach. In diesem Fall erstreckt sich die positive z-Achse etwa in den Fahrzeuginnenraum, wenn die Heckklappe geschlossen ist.

Dadurch, dass der Rahmen des Anbaumoduls ausgebildet und eingerichtet sein kann, dass das erste und das zweite Fach in Bezug auf die Montageebene aufeinander angeordnet sind, kann das jedem Fach zur Verfügung stehende Abmessungen maximiert werden. Im Idealfall kann jedes Fach annähernd die Breite und Höhe des Rahmens aufweisen. Dadurch können auch sperrige Teile im Anbaumodul verstaut werden.

In einer vorteilhaften Weiterbildung kann der Rahmen ausgebildet und eingerichtet sein, den Stauraum von drei Seiten zu umschließen, wobei der Rahmen ein oberes Rahmenteil, ein linkes Rahmenteil und ein rechtes Rahmenteil aufweisen kann. Vorzugsweise können das linke und das rechte Rahmenteil spiegelsymmetrisch ausgebildet sein. Gemäß dieser Ausgestaltungsform ist eine untere Seite des Stauraums nicht vom Rahmen umschlossen, wodurch über diese untere Seite die in dem Anbaumodul zu verstauenden Gegenständen eingesetzt und entnommen werden können.

Dadurch, dass der Rahmen ausgebildet und eingerichtet ist, den Stauraum von drei Seiten zu umschließen, kann grundsätzlich eine Seitenfläche zum Ein- und Ausladen von zu verstauenden Gegenständen offengelassen werden. Dadurch, dass der Rahmen ein oberes Rahmenteil, ein linkes Rahmenteil und ein rechtes Rahmenteil aufweist, kann der Rahmen aus einfach und kostengünstig herstellbaren Teilen, insbesondere Blechteilen hergestellt werden. Weiterhin kann das Anbaumodul dadurch in kompakte Einzelteile zerlegt werden, wodurch es einfacher gelagert, versendet oder recycelt werden kann. Durch die spiegelsymmetrische Ausbildung der linken und rechten Rahmenteile zueinander kann deren Konstruktion sowie der Auf- und Abbau des Anbaumoduls vereinfacht werden. Die Spiegelsymmetrie ist in Bezug auf eine zur Montageebene orthogonale und parallel zu den linken und rechten Rahmenteilen verlaufenden Spiegelebene zu verstehen.

Gemäß einer vorteilhaften Weiterbildung können das linke und/oder das rechte Rahmenteil einen zum Stauraum hin geöffneten U-förmigen Querschnitt aufweisen. Dadurch kann etwa ein erstes Fach des Stauraums bereitgestellt werden. Demnach kann ein Schenkel des U-förmigen Querschnitts in der Montageebene liegen und der gegenüberliegende Schenkel des U-förmigen Querschnitts ein Wandprofil bereitstellen. In diesem Fall kann der U-förmige Querschnitt ein erstes Fach des Stauraums als ein erstes Schubfach definieren. Die zum Stauraum hin orientierten Schenkel des U-förmigen Querschnitts können demnach eine formschlüssige Führungsschiene bereitstellen.

In einer weiteren vorteilhaften Weiterbildung können das linke Rahmenteil und/oder das rechte Rahmenteil einen zur vierten, nicht vom Rahmen umschlossenen Seite des Stauraums hin einen vergrößernden Querschnitt aufweisen. Einerseits kann dadurch das Ein- und Ausladen der zu verstauenden Gegenstände erleichtert werden. Andererseits können dadurch Gegenstände verstaut werden, die ebenfalls einen vergrößernden Querschnitt aufweisen. Sofern die vierte, nicht vom Rahmen umschlossene Seite des Stauraums unten angeordnet ist, kann dadurch weiterhin der Schwerpunkt des Anbaumoduls nach unten hin verlagert werden, wodurch die Sicherheit eines Fahrzeugs mit einem solchen Anbaumodul während der Fahrt verbessert werden kann.

Gemäß einer weiterbildenden Ausgestaltung kann das obere Rahmenteil einen L-förmigen Querschnitt aufweisen, wobei die Rahmenteile so ausgebildet und eingerichtet sein können, dass das linke Rahmenteil und das rechte Rahmenteil mit dem oberen Rahmenteil fluchtend zusammensetzbar sind. Aufgrund des L-förmigen Querschnitts des oberen Rahmenteils können Kraftflüsse zwischen dem oberen Rahmenteil und den angrenzenden linken und rechten Rahmenteilen verbessert geleitet werden, da eine vergrößerte Kontaktfläche bereitgestellt werden kann. Unter fluchtend zusammensetzbar ist im Allgemeinen zu verstehen, dass die einzelnen Rahmenteile geometrisch so zusammenpassen, dass keine über Spaltmaße hinausgehende Lücken ausgebildet werden, wenn der Rahmen zusammengebaut ist. Dadurch kann eine falsche Anordnung der Rahmenteile relativ zueinander bei der Montage weitestgehend ausgeschlossen werden kann. Letztlich wird dadurch eine vereinfachte Montage des Rahmens erzielt.

Gemäß einer vorteilhaften Weiterbildung können die Rahmenteile des Anbaumoduls geklebt, heißgeschweißt, Hochfrequenzgeschweißt, durch Spritzgießen hergestellt, geschraubt, genietet, mittels Druckknöpfe oder Rasterverschlüssen verbunden und dergleichen sein. Dies gilt gleichermaßen für die Befestigung der Scharnierverbindung an der Klappe sowie für die Befestigung der Scharnierverbindung am Rahmen. Dadurch werden die Rahmenteile aneinander befestigt. Dies hat den Vorteil, dass die Stabilität des Anbaumoduls gegenüber einem mehrteiligen Moduls deutlich erhöht ist.

Gemäß einer vorteilhaften Weiterbildung kann der Rahmen weiterhin eine umlaufende Schiene aufweisen, wobei die umlaufende Schiene vorzugsweise einen zum Stauraum hin geöffneten U-förmigen Querschnitt aufweist. Die umlaufende Schiene kann beispielsweise auf dem linken Rahmenteil, dem rechten Rahmenteil und dem oberen Rahmenteil angeordnet sein. Insbesondere kann die umlaufende Schiene auf den der Montageebene gegenüberliegenden Seiten der Rahmenteile angeordnet sein. Durch die umlaufende Schiene kann der Stauraum in ein zweites Fach unterteilt werden. Demnach können die Schenkel des U-förmigen Querschnitts ein Wandprofil bereitstellen. In diesem Fall kann der U-förmige Querschnitt ein zweites Fach des Stauraums als ein erstes Schubfach definieren. Die zum Stauraum hin orientierten Schenkel des U-förmigen Querschnitts können demnach eine formschlüssige Führungsschiene bereitstellen.

Gemäß einer vorteilhaften Weiterbildung können das linke Rahmenteil, das rechte Rahmenteil und/oder das obere Rahmenteil Befestigungsmittel aufweisen, über die der Rahmen in der Montageebene an der Heckklappe befestigbar ist. Beispielsweise können die Befestigungsmittel Öffnungen, Aussparungen, Vorsprünge und/oder Gewinde aufweisen. Vorzugsweise sind die Befestigungsmittel an eine typische oder beabsichtigte Heckklappe angepasst, beispielsweise so, dass bereits in der Heckklappe vorgesehene Befestigungsmöglichkeiten zum Eingriff mit den Befestigungsmitteln angepasst sind. Dadurch kann eine einfache, sichere und kostengünstige Befestigung des Anbaumoduls an der Heckklappe gewährleistet werden.

Gemäß einer vorteilhaften Weiterbildung können die Befestigungsmittel beispielsweise Flachkopfschrauben umfassen, vorzugsweise insgesamt acht Flachkopfschrauben, die an einer Heckklappe eines Fahrzeugs lösbar befestigbar sind. Die Flachkopfschrauben können auch Teil einer nicht zum Anbaumodul gehörenden Heckklappe eines Fahrzeugs sein.

Alternativ oder ergänzend können die Befestigungsmittel Schlüssellochbohrungen umfassen. Dadurch kann das Anbaumodul auf einfache Weise an eine Heckklappe eines Fahrzeugs montiert werden, indem ein Montageverfahren zur Montage eines Anbaumoduls an eine Heckklappe eines Fahrzeugs etwa folgende beispielhafte Schritte umfasst:
1. Teilweises Lösen der Flachkopfschrauben an einer Heckklappe eines Fahrzeugs, vorzugsweise aller Flachkopfschrauben, die ein herstellerseitig eingebautes Heckklappenpaneel an der Heckklappe befestigen;
2. Einstecken und Einrasten der Schlüssellochbohrungen des Anbaumoduls in die bzw. unter die teilweise gelösten Flachkopfschrauben; und
3. Anziehen der teilweise gelösten Flachkopfschrauben, in die bzw. unter die die Schlüssellochbohrungen des Anbaumoduls eingesteckt und eingerastet sind.

Dadurch kann das Anbaumodul mit wenigen Handgriffen und ohne lose Teile bereitzustellen an einer Heckklappe eines Fahrzeugs befestigt werden. Dadurch können Herstellungskosten und der Montageaufwand reduziert werden. Letztlich kann dadurch ein Anbaumodul gemäß der vorliegenden Offenbarung innerhalb weniger Minuten von einer Person montiert bzw. demontiert werden. Für die Demontage sind die offenbarten Schritte entsprechend in umgekehrter Reihenfolge zu absolvieren.

Die Offenbarung schlägt in diesem konkreten Beispiel also vor, teilweise auf bereits in oder an einer Heckklappe vorhandene Befestigungsmittel zurückzugreifen, und diese bei der Montage des Anbaumoduls zu verwenden. Dem Fachmann ist klar, dass die Befestigungsmittel gemäß diesem Ansatz zumindest teilweise von den herstellerseitig verwendeten Befestigungsmitteln abhängen können. Dem hier offenbarten Ansatz folgend wird der Fachmann darauf aufbauend entsprechend komplementäre Befestigungsmittel am Anbaumodul identifizieren, ggf. unter Zuhilfenahme einfacher Experimente, um die Lehre der vorliegenden Offenbarung entsprechend umzusetzen.

Das Montageverfahren kann gemäß einer vorteilhaften Weiterbildung den Schritt des Einführens einer Tischplatte in ein erstes Fach und/oder den Schritt des Einführens eines oder zweier Klappstühle in ein zweites Fach umfassen.

Diese Schritte können sowohl vor als auch nach der Montage des Anbaumoduls an der Heckklappe erfolgen.

Gemäß einer vorteilhaften Weiterbildung kann das Anbaumodul weiterhin eine öffenbare und verschließbare Klappe umfassen, die ausgebildet und eingerichtet ist, Zugang zum ersten und/oder zum zweiten Fach herzustellen. Dadurch können die zu verstauenden Gegenstände bei geöffneter Klappe in das Anbaumodul eingeführt oder aus dem Anbaumodul entnommen werden. Weiterhin kann bei geschlossener Klappe das Anbaumodul verriegelt werden.

Gemäß einer vorteilhaften Weiterbildung ist die Klappe ausgebildet und eingerichtet, den Stauraum in einem Bereich öffnen und schließen zu können, entlang dem der Stauraum nicht vom Rahmen umschlossen ist. Dadurch kann auf einfache Weise das Anbaumodul bei geschlossener Klappe eine vollständig geschlossene Außenhülle aufweisen. Beispielsweise kann die Klappe an einer vierten Seite des Stauraums ausgeführt sein, die nicht vom Rahmen umschlossen ist. Dadurch kann auch die Klappe als ein einfaches gerades Bauteil ausgeführt sein.

Weiterbildend kann die Klappe eine Scharnierverbindung aufweisen, wobei die Scharnierverbindung vorzugsweise am Rahmen befestigt ist. Dadurch kann die Klappe einfach und sicher geöffnet und geschlossen werden. Beispielsweise kann die Scharnierverbindung an zwei Scharniere umfassen, die jeweils links und rechts an der Klappe angeordnet sind und entsprechend an dem linken bzw. rechten Rahmenteil befestigt werden können. Vorzugsweise weist die Klappe einen L-förmigen Querschnitt auf, wobei ein Schenkel die seitliche Abdeckung des Stauraums erfüllt, etwa nach unten hin, und wobei die Scharnierverbindung am anderen Schenkel des L-förmigen Querschnitts der Klappe angeordnet ist. Dadurch können die Haptik und Optik der Klappe sowie die Entnahme aus den Fächern verbessert werden.

Gemäß einer vorteilhaften Weiterbildung kann der Rahmen zur Montageebene abgewandten Seite hin offen ausgebildet sein, vorzugweise wobei das zweite Fach des Rahmens so ausgebildet und eingerichtet ist, dass eine im zweiten Fach eingesetzte Tischplatte die zur Montageebene offene Seite des Rahmens ganz oder teilweise schließt.

Dadurch, dass der Rahmen zur Montageebene abgewandten Seite hin offen ausgebildet ist, kann Gewicht und Volumen des Anbaumoduls eingespart werden. Dadurch, dass das zweite Fach des Rahmens so ausgebildet und eingerichtet ist, dass eine im zweiten Fach eingesetzte Tischplatte die zur Montageebene offene Seite des Rahmens ganz oder teilweise schließt, kann einerseits die Tischplatte entnommen werden, um ihre Funktion als solche zu erfüllen. Andererseits kann die Tischplatte im eingesetzten Zustand die Funktion einer Abdeckung des Anbaumoduls erfüllen. Letztlich können auf diese Art und Weise Gewicht und Volumen des Anbaumoduls eingespart werden.

Gemäß einer vorteilhaften Weiterbildung kann der Rahmen weiterhin ausgebildet und eingerichtet sein, im Stauraum ein Zusatzfach auszubilden, das über eine separate Zusatzfachöffnung zugänglich ist. Im Sinne der vorliegenden Offenbarung kann unter dem Zusatzfach ein Fach verstanden werden, das vollständig oder teilweise räumlich vom übrigen Stauraum, der durch den Rahmen in zumindest ein erstes und ein zweites Fach unterteilt ist, getrennt ist. Dadurch kann ein Staufach bereitgestellt werden, das vom übrigen Stauraum unabhängig zugänglich ist. Das hat den Vorteil, dass das Zusatzfach sowohl im entladenen Zustand als auch im beladenen Zustand des übrigen Stauraums stets dieselbe Verfügbarkeit bereitstellt.

Beispielsweise kann das Zusatzfach so ausgebildet sein, dass es an einem Rahmenteil als Vertiefung ausgeführt ist, die sich in den Stauraum hinein erstreckt. In diesem Fall wird der verbleibende Stauraum entsprechend reduziert. Der Fachmann wird der vorliegenden Offenbarung entnehmen können, dass die Abmessungen eines derartigen Staufachs mit Rücksicht auf die maximal möglichen Abmessungen des Anbaumoduls und mit Rücksicht auf die ansonsten in den ersten und zweiten Fächern zu verstauenden Gegenstände zu dimensionieren sind. Für den Fachmann ist klar, dass dies letztlich beliebige Größen sind, die von nicht zur Offenbarung gehörenden, äußeren Gegebenheiten abhängen, die allerdings mittels einfacher Überlegungen und ggf. Experimente von Fall zu Fall ermittelt werden können.

Gemäß einer vorteilhaften Weiterbildung kann das Zusatzfach ausgebildet und eingerichtet sein, über eine Außenseite, insbesondere die Oberseite des Rahmens, zugänglich zu sein. Dadurch kann erzielt werden, dass ein Benutzer des Zusatzfachs jederzeit Gegenstände in das Zusatzfach hineinlegen oder entnehmen kann. Beispielsweise selbst dann, wenn das Anbaumodul an einer Heckklappe montiert ist, wenn das erste und zweite Fach des Rahmens beladen sind, und wenn die Heckklappe geschlossen ist. In diesem Fall kann nämlich das Zusatzfach etwa immer noch vom Innenraum des Fahrzeugs aus zugänglich sein.

Gemäß einer vorteilhaften Weiterbildung kann die Zusatzfachöffnung vorzugsweise mittels einer Zusatzfachklappe verschließbar sein. Dadurch kann das Zusatzfach effektiv verschlossen werden und es kann gewährleistet werden, dass darin gelagerte Gegenstände selbst dann nicht aus dem Zusatzfach fallen, wenn etwa die Heckklappe geschwenkt wird.

Gemäß einer vorteilhaften Weiterbildung kann die Zusatzfachklappe mittels eines oder mehrerer Scharniere am Rahmen schwenkbar befestigt sein und mittels einer Zusatzfachverschlussvorrichtung am Rahmen verschließbar sein. Dadurch kann auf eine einfache, sichere und kostengünstige Weise Zugang und Verschluss des Zusatzfachs gewährleistet werden. Die Zusatzfachverschlussvorrichtung kann beispielsweise ein Push-Lock Schloss umfassen.

Gemäß einer vorteilhaften Weiterbildung kann das Anbaumodul weiterhin einen oder zwei Klappstühle umfassen, die ausgebildet und eingerichtet sind, in das erste Fach eingesetzt und herausgenommen zu werden, und eine Tischplatte, die ausgebildet und eingerichtet ist, in das zweite Fach eingesetzt und herausgenommen zu werden. Dadurch ist es möglich, mit dem Anbaumodul gemäß der vorliegenden Offenbarung eine Tischplatte und zwei Klappstühle zu verstauen.

Gemäß einer vorteilhaften Weiterbildung können weiterhin Tischfüße an der Tischplatte vorgesehen sein, wobei das Anbaumodul so ausgebildet und eingerichtet sein kann, dass die Tischfüße im eingesetzten Zustand der Tischplatte zum Innenraum des Anbaumoduls orientiert angeordnet sind, oder nach Außen zur Umgebung des Anbaumoduls hin orientiert angeordnet sind.

Die erfindungsgemäße Aufgabe wird weiterhin mit einer Heckklappe gelöst, die ein Anbaumodul gemäß der vorliegenden Offenbarung umfasst, wobei die Heckklappe vorzugsweise ausgebildet und eingerichtet ist, nach oben und/oder zur Seite schwenkbar geöffnet zu werden. Mit einer solchen Heckklappe ist es möglich, selbst sperrige Gegenstände fahrzeuginnenseitig an derselben zu verstauen. Dadurch kann das verbleibende Ladevolumen im Innenraum eines Fahrzeugs maximiert werden. Weiterhin kann dadurch die Sicherheit der im Anbaumodul verstauten Gegenstände maximiert werden, da diese eindeutig, einfach und sicher im Anbaumodul verstaut sein können. Ferner kann vermieden werden, Gegenstände bzw. weitere Gegenstände an einer Außenseite des Fahrzeugs zu verstauen. Letztlich werden dadurch Schutz dieser Gegenstände vor Fremdeinwirkung maximiert, Personenschaden durch ebendiese Gegenstände vermieden und ein erhöhter Luftwiderstand durch ebendiese Gegenstände oder anderer Anbaumodule an einer Außenseite des Fahrzeugs vermieden.

Gemäß einer vorteilhaften Weiterbildung können eines oder mehrere Rahmenteile sowie die Klappe Aluminium, Stahl bzw. eine Stahllegierung, Kunststoff, Carbon und/oder einen Verbundwerkstoff, beispielsweise GFK oder CFK, aufweisen und aus einem Biegeverfahren, Spritzguss, Aludruckguss, 3D-Druck und/oder Tiefziehverfahren hergestellt sein. Die Herstellung des einen oder der mehreren Rahmenteile aus Stahl bzw. Stahlblech hat den Vorteil, dass dies verhältnismäßig kostengünstig und unkompliziert hergestellt und gleichzeitig ein hohes Maß an Stabilität und Sicherheit erzielt werden kann. Eine Herstellung desselben bzw. derselben aus Carbon kann beispielsweise den Vorteil haben, dass dadurch ein sehr geringes Gewicht erzielt werden kann, wodurch die verbleibende Nutzlast eines derart ausgerüsteten Fahrzeugs möglichst groß ist.

Gemäß einer vorteilhaften Weiterbildung können die Oberflächen eines oder mehrerer Rahmenteile sowie der Klappe eine unbehandelte Oberfläche aufweisen. Alternative können die Oberflächen einer Oberflächenbehandlung unterzogen werden, die eine chemische Oberflächenvorbehandlung wie etwa Reinigen, Entfetten, Beizen, Enteloxieren und/oder einer mechanische Oberflächenvorbehandlung oder Oberflächenbehandlung wie etwa Schleifen, Polieren, Strahlen, Bürsten umfasst. Dadurch können die Oberflächen des einen oder der mehreren Rahmenteile optisch, stofflich und funktionsmäßig veredelt bzw. verbessert werden. Beispielsweise kann dadurch die Oberfläche eines oder mehrerer Rahmenteile sowie der Klappe farblich, stofflich, haptisch an eine Gestaltung eines Fahrzeuginnenraums angepasst werden.

Alternativ oder ergänzend können die Oberflächen eines oder mehrerer Rahmenteile sowie der Klappe einem Beschichtungsverfahren unterzogen werden, das Lackieren, Pulverbeschichten, galvanische Metallabscheidung, Emaillieren, und/oder Schmelztauchen, insbesondere Feuerverzinken, umfasst. Dadurch können die Oberflächen des einen oder der mehreren Rahmenteile optisch, stofflich und funktionsmäßig veredelt bzw. verbessert werden. Beispielsweise kann dadurch die Oberfläche eines oder mehrerer Rahmenteile sowie der Klappe farblich, stofflich, haptisch an eine Gestaltung eines Fahrzeuginnenraums angepasst werden.

Weiterhin können die Oberflächen eines oder mehrerer Rahmenteile sowie der Klappe eine Beschichtung aufweisen, insbesondere einen Bezug, der Leder, gewebte oder nicht gewebte Textilien, insbesondere Filz und/oder eine Folie umfasst. Entsprechend können für die Aufbringung der Oberflächenbeschichtung auf eines oder mehrere der Rahmenteile sowie der Klappe Klebe, Schweiß und/oder Bespannverfahren angewendet werden, wie sie dem Fachmann allgemein bekannt sind. Dadurch können die Oberflächen des einen oder der mehreren Rahmenteile optisch, stofflich und funktionsmäßig veredelt bzw. verbessert werden. Beispielsweise kann dadurch die Oberfläche eines oder mehrerer Rahmenteile sowie der Klappe farblich, stofflich, haptisch an eine Gestaltung eines Fahrzeuginnenraums angepasst werden. Beispielsweise kann über eine Beschichtung eine weichere Oberfläche erzielt werden, wodurch die Sicherheit für die Insassen eines Fahrzeugs erhöht wird, das mit einem Anbaumodul gemäß der vorliegenden Offenbarung ausgerüstet ist.

Für die vorstehenden Ausführungen gilt stets, dass es sich bei der genannten Oberfläche bzw. den genannten Oberflächen nicht zwingend um die gesamte Oberfläche eines Rahmenteils oder der Klappe handeln muss, sondern dass damit auch nur ein Teilbereich der gesamten Oberfläche eines Rahmenteils oder der Klappe gemeint sein kann. Weitere Vorteile und Merkmale der vorliegenden Erfindung sind aus der folgenden Beschreibung bevorzugter Ausführungsbeispiele ersichtlich. Die dort beschriebenen Merkmale können alleinstehend oder in Kombination mit einem oder mehreren der oben dargelegten Merkmale umgesetzt werden, insofern sich die Merkmale nicht widersprechen. Die folgende Beschreibung bevorzugter Ausführungsbeispiele erfolgt dabei mit Bezug auf die begleitenden Zeichnungen.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine perspektivische Ansicht eines Anbaumoduls gemäß einer Ausführungsform der vorliegenden Offenbarung;
- Figur 2: das Anbaumodul aus Figur 1 in einer Ansicht von unten;
- Figur 3: eine perspektivische Darstellung eines linken Rahmenteils des Anbaumoduls aus Figuren 1 und 2;
- Figur 4: eine perspektivische Darstellung eines rechten Rahmenteils des Anbaumoduls aus Figuren 1 und 2;
- Figur 5: eine perspektivische Darstellung des oberen Rahmenteils 12a des Anbaumoduls aus Figuren 1 und 2;
- Figur 6: eine perspektivische Darstellung einer öffenbaren und verschließbaren Klappe des Anbaumoduls aus Figuren 1 und 2;
- Figur 7: eine perspektivische Darstellung der umlaufenden Schiene des Anbaumoduls aus Figuren 1 und 2;
- Figur 8: das Anbaumodul gemäß der vorliegenden Offenbarung in einem geschlossenen Zustand und montiert an eine Heckklappe;
- Figur 9: das Anbaumodul aus Figur 8 mit einer geöffneten Klappe;
- Figur 10: das Anbaumodul aus Figur 9 in einer perspektivischen Darstellung mit geöffneter Klappe und einem teilweise aus dem ersten Fach herausgenommenen Klappstuhl;
- Figur 11: das Anbaumodul 10 aus Figur 10 in einer perspektivischen Darstellung mit geöffneter Klappe und mit teilweise aus dem zweiten Fach herausgenommener Tischplatte;
- Figur 12: das Anbaumodul aus den Figuren 8 bis 11 in einer perspektivischen Darstellung und mit vollständig entleerten ersten und zweiten Fächern;
- Figur 13: eine Variante der Ausführungsform in einer ersten perspektivischen Darstellung;
- Figur 14: die Variante der Ausführungsform in einer zweiten perspektivischen Darstellung; und
- Figur 15: eine Heckklappe zusammen mit einem Anbaumodul gemäß einer Variante der Ausführungsform.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

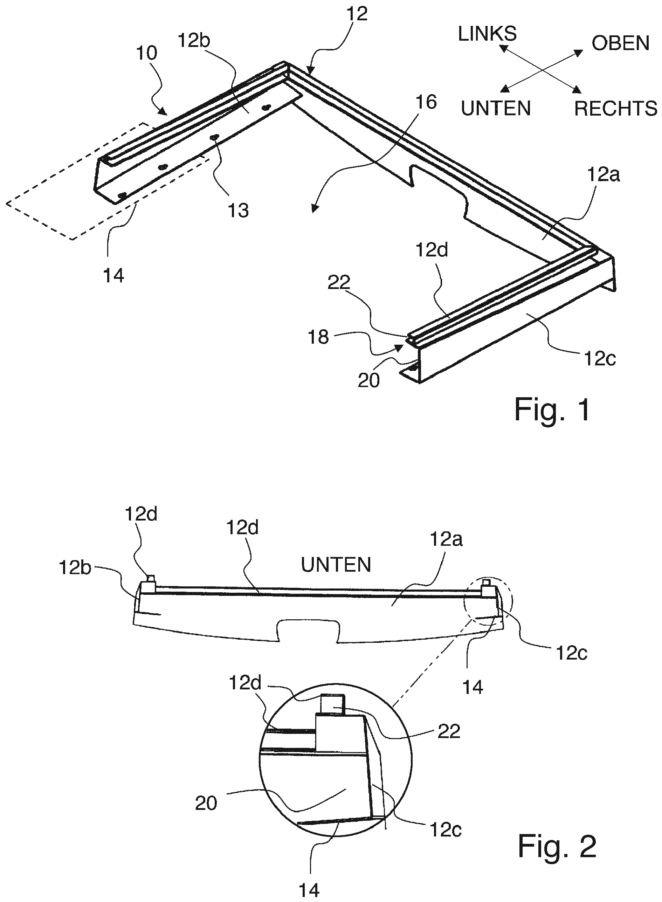

In Figur 1 ist eine perspektivische Ansicht eines Anbaumoduls 10 gemäß einer Ausführungsform der vorliegenden Offenbarung gezeigt. Figur 1 zeigt auch ein schematisches Koordinatensystem, anhand dem die beispielhaft gewählten Richtungsangaben oben, unten, links und rechts für die vorliegende Offenbarung definiert werden.

Das Anbaumodul 10 ist für eine Heckklappe (nicht gezeigt in Figur 1) eines Fahrzeugs, insbesondere eines Campingfahrzeugs, geeignet. Das Anbaumodul 10 weist einen Rahmen 12 auf, der fahrzeuginnenseitig an der Heckklappe in einer Montageebene 14 befestigbar ist und einen Stauraum 16 zumindest teilweise umschließt. Der Rahmen 12 ist dabei ausgebildet und eingerichtet, den Stauraum 16 in ein erstes Fach 20 und ein zweites Fach 22 zu unterteilen.

Gemäß der abgebildeten Ausführungsform kann der Rahmen 12 weiterhin ein zum Stauraum 16 hin ausgebildetes Wandprofil 18 aufweisen, das ausgebildet und eingerichtet ist, das erste Fach 20 als ein erstes Schubfach und/oder das zweite Fach 22 als ein zweites Schubfach zu definieren. Konkret ist das Wandprofil 18 ausgebildet und eingerichtet, sowohl das erste Fach 20 als ein erstes Schubfach als auch das zweite Fach 22 als ein zweites Schubfach zu definieren.

Weiterhin kann der Rahmen 12 so ausgebildet und eingerichtet sein, dass das erste und zweite Fach 20, 22 in Bezug auf die Montageebene 14 aufeinander angeordnet sind. Der Rahmen 12 kann gemäß der Abbildung in Figur 1 ausgebildet sein, den Stauraum 16 von drei Seiten zu umschließen, wobei der Rahmen 12 ein oberes Rahmenteil 12a, ein linkes Rahmenteil 12b und ein rechtes Rahmenteil 12c aufweist, wobei das linke Rahmenteil 12b zum rechten Rahmenteil 12c spiegelsymmetrisch ausgebildet sein kann.

Das linke Rahmenteil 12b und das rechte Rahmenteil können einen zum Stauraum 16 hin geöffneten U-förmigen Querschnitt aufweisen. Das linke Rahmenteil 12b und das rechte Rahmenteil 12c kann einen zur vierten, nicht vom Rahmen 12 umschlossenen Seite des Stauraums 16 hin einen vergrößernden Querschnitt aufweisen. In dem gezeigten Fall ist die untere Seite des Anbaumoduls 10 die vierte, nicht vom Rahmen 12 umschlossene Seite des Stauraums 16. Alternativ könnte auch die obere Seite des Anbaumoduls 10 die vierte, nicht vom Rahmen 12 umschlossene Seite des Stauraums 16 sein.

Das obere Rahmenteil 12a kann einen L-förmigen Querschnitt aufweisen, wobei die Rahmenteile 12a-12c alle so ausgebildet und eingerichtet sind, dass das linke Rahmenteil 12b und das rechte Rahmenteil 12c mit dem oberen Rahmenteil 12a fluchtend zusammensetzbar sind.

Gemäß der Abbildung in Figur 1 kann das Anbaumodul 10 weiterhin eine umlaufende Schiene 12d aufweisen, wobei die umlaufende Schiene 12d vorzugsweise einen zum Stauraum 16 hin geöffneten U-förmigen Querschnitt aufweist. Ferner weisen das linke Rahmenteil 12b sowie das rechte Rahmenteil 12c Befestigungsmittel 13 auf, über die der Rahmen 12 in der Montagebene 14 an der Heckklappe (nicht gezeigt in Figur 1) befestigbar ist.

Figur 2 zeigt das Anbaumodul 10 aus Figur 1 in einer Ansicht von unten. Ferner zeigt Figur 2 eine Vergrößerung des rechten Eckbereichs des Anbaumoduls 10 in derselben Ansicht. Die Abbildung aus Figur 2 dient zur Veranschaulichung beispielhaft offenbarter Größenverhältnisse zwischen dem ersten Fach 20 und dem zweiten Fach 22 sowie der U-förmigen Querschnitte des rechten Rahmenteils 12c und der umlaufenden Schiene 12d.

Weiterhin ist gezeigt, dass das linke Rahmenteil 12b und das rechte Rahmenteil 12c so an das obere Rahmenteil 12a montiert sein können, dass die freien Enden der Rahmenteile 12b und 12c enger beieinander liegen als deren Enden am oberen Rahmenteil 12a. Beispielsweise kann die Abstandsvergrößerung zwischen der Breite des Anbaumoduls 10 an den freien Enden der linken und rechten Rahmenteile und der maximale Breite (von links nach rechts) des Anbaumoduls 2% betragen.

Aus den Abbildungen der Figuren 1 und 2 geht weiterhin hervor, dass die umlaufende Schiene eine geringere Tiefe als die Rahmenteile 12a-c aufweisen kann und an den Rahmenteilen 12a-c zum Stauraum 16 hin bündig angeordnet sein kann.

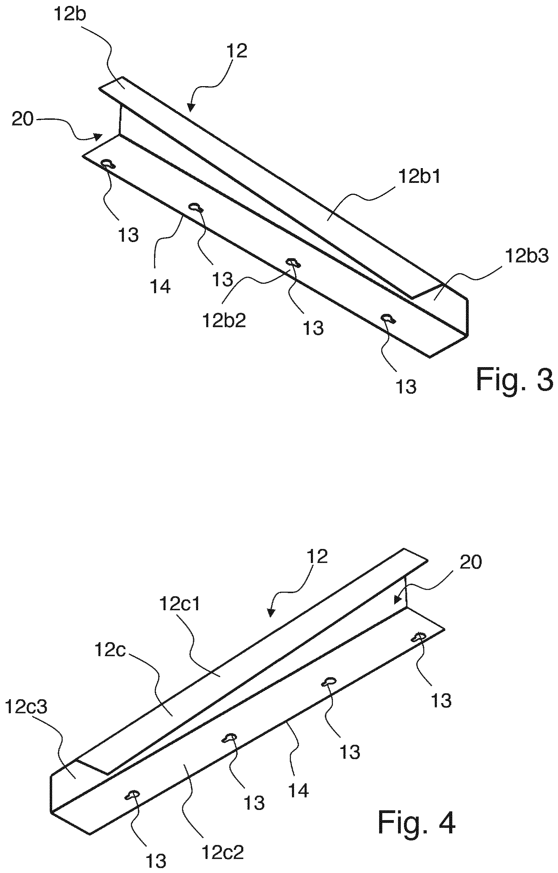

Figur 3 zeigt eine perspektivische Darstellung des linken Rahmenteils 12b des Anbaumoduls 10 aus Figuren 1 und 2. Figur 4 zeigt eine perspektivische Darstellung des rechten Rahmenteils 12c des Anbaumoduls 10 aus Figuren 1 und 2. Das linke Rahmenteil 12b ist spiegelsymmetrisch zum rechten Rahmenteil 12c und die folgenden Ausführungen gelten für beide Rahmenteile gleichermaßen. Entsprechend weisen das linke bzw. rechte Rahmenteil 12b, 12c einen U-förmigen, zu einer Seite hin vergrößernden Querschnitt auf.

Jedes Rahmenteil kann gemäß den Abbildungen aus Figuren 3 und 4 einen zur Montagebene 14 gewandten Schenkel 12b2, 12c2 aufweisen, an dem Befestigungsmittel 13 ausgebildet sein können. Die jeweils gegenüberliegenden Schenkel 12b1, 12c1 der U-förmigen Querschnitte können weiterhin an ihrem jüngeren Ende jeweils eine Aussparung 12b3 bzw. 12c3 aufweisen. Diese Aussparungen können als Aufnahme für das obere Rahmenteil 12a dienen (nicht abgebildet in Figuren 3 und 4).

Die unteren Schenkel 12b2, 12c2 können etwa eine konstante Breite aufweisen und rechtwinklig oder in einem Winkel kleiner als 90°, vorzugsweise 85°, abgewinkelt sein. Die oberen Schenkel 12b1, 12c1 können etwa eine zu ihrem jeweils jüngeren Ende hin eine zunehmende Breite aufweisen und in einem Winkel größer als 90° abgewinkelt sein, vorzugsweise 95°. Eine Wanddicke der linken bzw. rechten Rahmenteile 12b, 12c kann etwa 1.5 mm betragen. Diese Merkmale können allein oder in Verbindung die Stabilität des Rahmens 12 verbessern und sind beispielhaft zu verstehen.

Die Befestigungsmittel 13 sind so an den Schenkeln 12b2 bzw. 12c2 angeordnet, dass ein Zusammenbau mit einer nicht abgebildeten Heckklappe möglich ist.

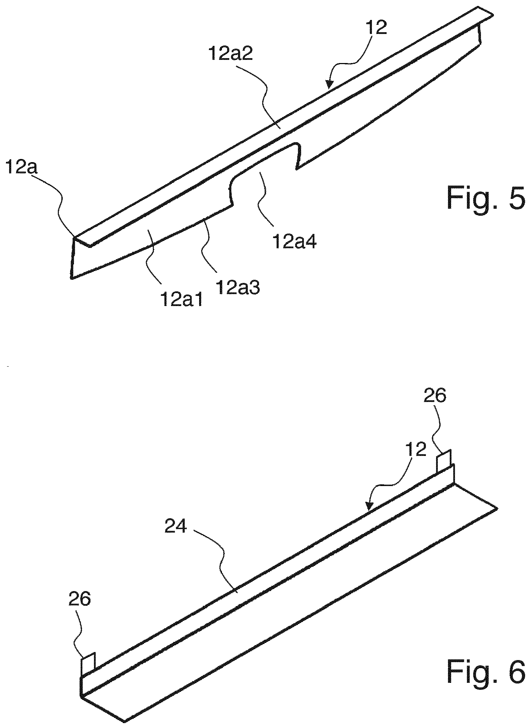

Figur 5 zeigt eine perspektivische Darstellung des oberen Rahmenteils 12a eines Rahmens 12 des Anbaumoduls aus Figuren 1 und 2. Gemäß der gezeigten Abbildung kann das obere Rahmenteil 12a einen L-förmigen Querschnitt aufweisen, umfassend einen oberen Schenkel 12a1 und einen vorderen Schenkel 12a2 sowie eine konkave Außenkontur 12a3 und eine Aussparung 12a4.

Der obere Schenkel 12a1 und der vordere Schenkel 12a2 können in einem Winkel größer oder gleich 90° zueinander abgewinkelt sein, vorzugsweise 93.2°. Die Materialstärke des oberen Rahmenteils 12a kann beispielsweise 1.5 mm betragen.

Figur 6 zeigt eine perspektivische Darstellung einer öffenbaren und verschließbaren Klappe 24 des Anbaumoduls 10 aus Figuren 1 und 2, wobei die Klappe 24 ausgebildet und eingerichtet ist, Zugang zum ersten und zum zweiten Fach herzustellen. Gemäß der gezeigten Abbildung kann die Klappe 24 als ein Seitenteil des Anbaumoduls 10 ausgebildet sein, um den Stauraum in einem Bereich öffnen und schließen zu können, entlang dem dieser nicht vom Rahmen umschlossen ist. Hierzu kann die Klappe eine Scharnierverbindung 26 aufweisen, die beispielsweise zwei Scharniere 26 am linken und rechten Ende der Klappe 24 umfasst.

Die Klappe 24 kann einen L-förmigen Querschnitt aufweisen, der beispielsweise in einem Winkel von 90° abgewinkelt ist. Die Materialstärke der Klappe 24 kann beispielsweise 2 mm betragen. Diese Merkmale können allein oder in Verbindung die Stabilität des der Klappe 24 verbessern und sind beispielhaft zu verstehen.

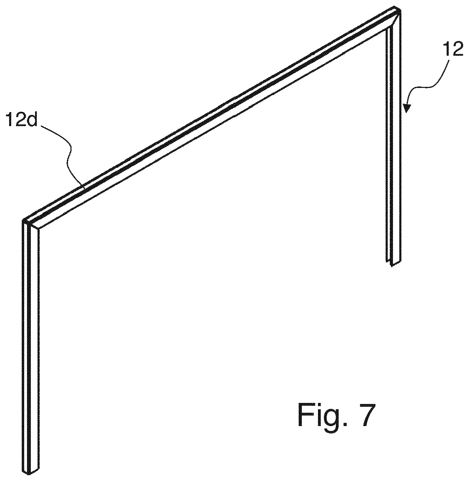

Figur 7 zeigt eine perspektivische Darstellung der umlaufenden Schiene 12d des Anbaumoduls aus Figuren 1 und 2. Gemäß der gezeigten Abbildung kann die umlaufende Schiene 12d einen U-förmigen Querschnitt aufweisen und selbst als U-förmiges Bauteil ausgeführt sein, dass sich beispielsweise über die drei Seiten links, oben, rechts des Rahmens 12 erstreckt. Die Schenkel des U-förmigen Querschnitts können eine unterschiedliche Schenkeltiefe aufweisen, wobei ein Schenkel etwa 20% größer sein kann als der andere Schenkel. Die Materialstärke kann beispielsweise 1.5 mm betragen.

Das obere Rahmenteil 12a, das linke Rahmenteil 12b, das rechte Rahmenteil 12c sowie die umlaufende Schiene 12d können beispielsweise jeweils aus einem gebogenem Flachblech hergestellt sein. Die Flachbleche können beispielsweise Aluminium, Eisen und/oder eine Stahllegierung aufweisen. Die Rahmenteile können eine bearbeitete oder unbearbeitete Oberfläche aufweisen. Diese Merkmale können allein oder in Verbindung die Stabilität des Rahmens 12 verbessern und sind beispielhaft zu verstehen.

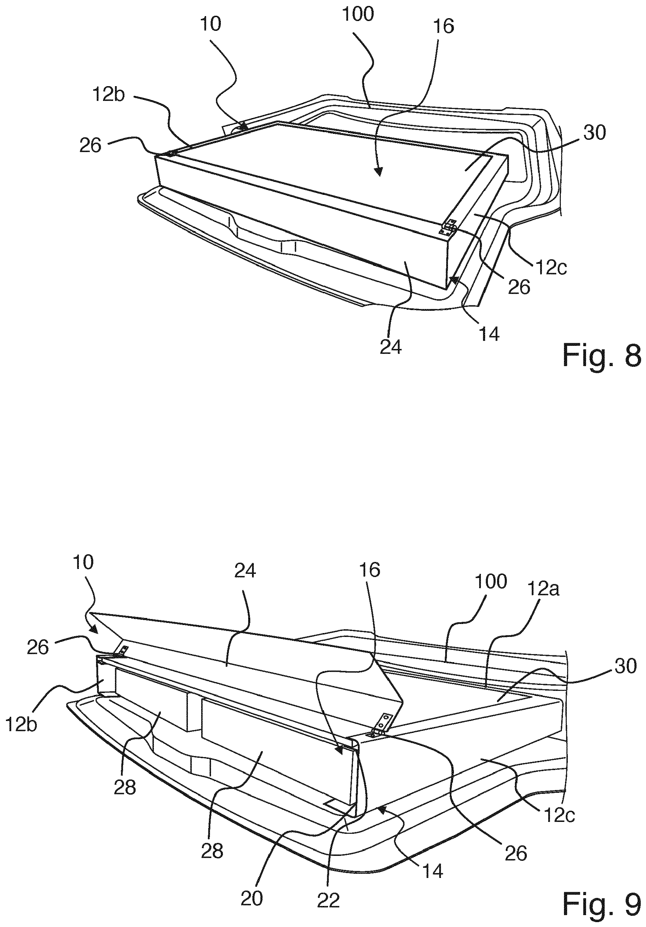

Figur 8 zeigt das Anbaumodul 10 gemäß der vorliegenden Offenbarung in einem geschlossenen Zustand und montiert an eine Heckklappe 100. Das Anbaumodul 10 ist für die Heckklappe 100 eines Fahrzeugs, insbesondere eines Campingfahrzeugs, geeignet. Das Anbaumodul 10 weist einen Rahmen 12 auf, der fahrzeuginnenseitig an der Heckklappe 100 in der Montageebene 14 befestigbar ist und einen Stauraum 16 zumindest teilweise umschließt. Der Rahmen 12 ist dabei ausgebildet und eingerichtet, den Stauraum 16 in ein erstes Fach und ein zweites Fach zu unterteilen.

Gemäß der abgebildeten Ausführungsform kann der Rahmen 12 kann gemäß der Abbildung in Figur 8 ausgebildet sein, den Stauraum 16 von drei Seiten zu umschließen, wobei der Rahmen 12 ein oberes Rahmenteil 12a, ein linkes Rahmenteil 12b und ein rechtes Rahmenteil 12c aufweist.

Der Rahmen 12 kann weiterhin zur Montageebene 14 abgewandten Seite hin offen ausgebildet sein, vorzugsweise wobei ein Fach des Rahmens so ausgebildet und eingerichtet ist, dass eine in diesem Fach eingesetzte Tischplatte 30 die offene Seite des Rahmens 12 ganz oder teilweise zu schließen.

Das Anbaumodul 10 kann weiterhin eine öffenbare und verschließbare Klappe 24 aufweisen, die ausgebildet und eingerichtet ist, Zugang zum ersten Fach und/oder zum zweiten Fach herzustellen. In der in Figur 8 gezeigten Abbildung ist die Klappe 24 vollständig geschlossen.

Die Heckklappe 100 kann gemäß der Abbildung aus Figur 8 ausgebildet und eingerichtet sein, nach oben schwenkbar geöffnet zu werden. Beispielsweise kann es sich hierbei um eine nach oben aufklappbare Heckklappe handeln, wie sie üblicherweise an Kleintransportern oder kleinen Transportbussen im europäischen Raum vorzufinden ist.

Figur 9 zeigt das Anbaumodul 10 aus Figur 8 mit einer geöffneten Klappe 24. Gemäß der gezeigten Abbildung kann die Klappe 24 ausgebildet und eingerichtet sein, Zugang zum ersten Fach 20 und zum zweiten Fach 22 herzustellen. Weiterhin kann die verschließbare Klappe 24 ausgebildet und eingerichtet sein, den Stauraum 16 in einem Bereich öffnen und schließen zu können, entlang dem der Stauraum 16 nicht vom Rahmen 12 umschlossen ist.

Ferner kann die Klappe 24 eine Scharnierverbindung 26 aufweisen, wobei die Scharnierverbindung 26 zwei am Rahmen 12 befestigte Scharniere 26 umfasst. Konkret ist ein Scharnier am linken Rahmenteil 12b und ein weiteres Scharnier 26 am rechten Rahmenteil 12c befestigt.

Gemäß der gezeigten Abbildung in Figur 9 kann der Rahmen weiterhin so ausgebildet und eingerichtet sein, dass er zur Montageebene 14 abgewandten Seite hin offen ausgebildet ist, wobei das zweite Fach 22 des Rahmens 12 so ausgebildet und eingerichtet sein kann, dass eine im zweiten Fach 22 eingesetzte Tischplatte 30 die offene Seite des Rahmens 12 ganz verschließen kann.

Das erste und zweite Fach kann jeweils als ein Schubfach ausgeführt sein. Weiterhin kann das Anbaumodul 10 zwei Klappstühle 28 umfassen, die ausgebildet und eingerichtet sind, in das erste Fach 20 des Rahmens eingesetzt und herausgenommen zu werden. Alternativ oder ergänzend kann das Anbaumodul beispielsweise eine Tischplatte 30 aufweisen, die ausgebildet und eingerichtet sein kann, in das zweite Fach eingesetzt und herausgenommen zu werden.

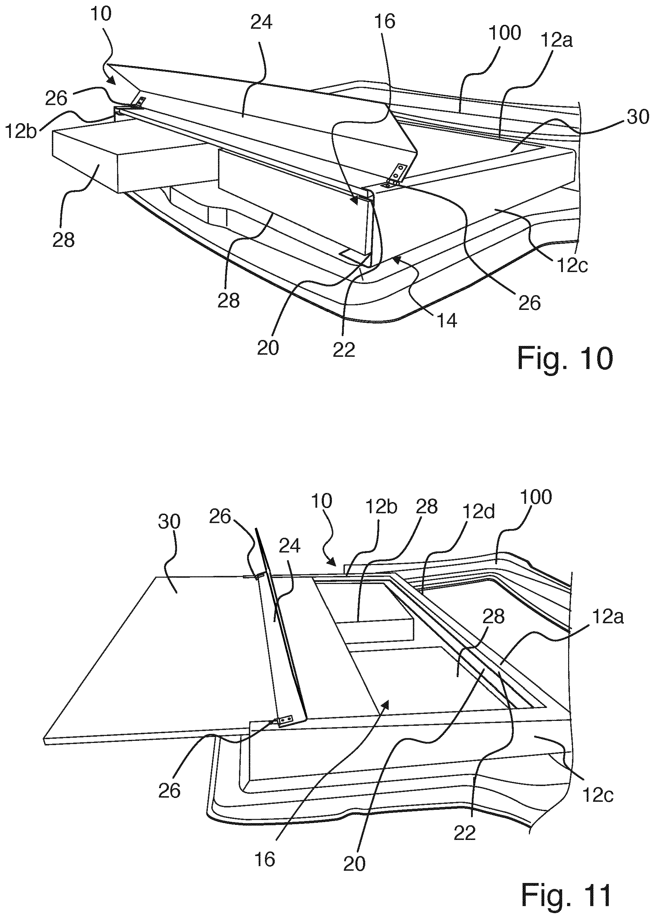

Figur 10 zeigt das Anbaumodul 10 aus Figur 9 in einer perspektivischen Darstellung mit geöffneter Klappe 24 und einem teilweise aus dem ersten Fach 20 herausgenommenen Klappstuhl 28. Der zweite Klappstuhl 28 ist weiterhin in einem eingesetzten Zustand. Ebenso befindet sich die Tischplatte 30 im zweiten Fach 22 in einem vollständig eingesetzten Zustand.

Figur 11 zeigt das Anbaumodul 10 aus Figur 10 in einer perspektivischen Darstellung mit geöffneter Klappe 24 und mit teilweise aus dem zweiten Fach 22 herausgenommener Tischplatte 30. Gemäß dieser Abbildung befinden sich die beiden Klappstühle 28 in einem vollständig eingesetzten Zustand im ersten Fach 20.

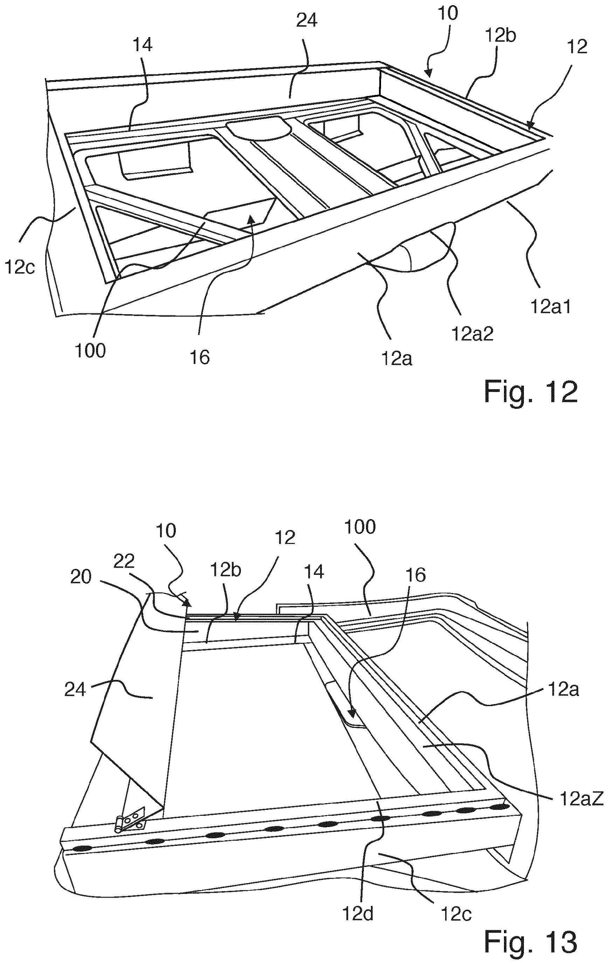

Figur 12 zeigt das Anbaumodul 10 aus den Figuren 8 bis 11 in einer perspektivischen Darstellung und mit vollständig entleerten ersten und zweiten Fächern 20, 22. Gemäß dieser Abbildung sind die zwei Klappstühle 28 sowie die Tischplatte 30 entnommen und die Klappe 24 ist geschlossen. Da der Rahmen 12 zur Montageebene 14 abgewandten Seite hin offen ausgebildet ist, ist bei entnommener Tischplatte und bei entnommenen Klappstühlen der Rahmen 12 und die Klappe 24 die Heckklappe 100 in der Montageebene 14 zu erkennen.

Soweit anwendbar, können alle einzelnen Merkmale, die in den Ausführungsbeispielen dargestellt sind, miteinander kombiniert und/oder ausgetauscht werden, ohne den Bereich der Erfindung zu verlassen.

Figur 13 zeigt eine Variante des Anbaumoduls 10 in einer ersten perspektivischen Darstellung. Sofern nicht anders angegeben, gelten die zuvor geschilderten Merkmale und Effekte auch für diese Variante. Das Anbaumodul 10 weist einen Rahmen 12 auf, der fahrzeuginnenseitig an der Heckklappe 100 in einer Montageebene 14 befestigbar ist und einen Stauraum 16 zumindest teilweise umschließt. Der Rahmen 12 ist dabei ausgebildet und eingerichtet, den Stauraum 16 in ein erstes Fach 20 und ein zweites Fach 22 zu unterteilen. Der Rahmen 12 kann dabei ein oberes Rahmenteil 12a, ein linkes Rahmenteil 12b und ein rechtes Rahmenteil 12c aufweisen. Das Anbaumodul 10 kann weiterhin eine umlaufende Schiene 12d sowie eine öffenbare und verschließbare Klappe 24 aufweisen.

Ferner kann der Rahmen 12 des Anbaumoduls 10 ausgebildet und eingerichtet sein, im Stauraum 16 ein Zusatzfach 12aZ auszubilden, das über eine separate Zusatzfachöffnung (nicht abgebildet in Figur 13) zugänglich sein kann. Das Zusatzfach 12aZ kann dabei vollständig räumlich vom übrigen Stauraum 16 getrennt sein, wodurch ein Staufach bereitgestellt werden kann, das unabhängig vom übrigen Stauraum 16 zugänglich ist.

Das Zusatzfach 12aZ kann dabei am oberen Rahmenteil 12a ausgebildet sein, beispielsweise als eine Vertiefung, die sich in den Stauraum 16 hinein erstreckt. Dadurch wird der übrige Stauraum 16 bei gleichbleibenden Außenabmaßen des Rahmens 12 entsprechend reduziert.

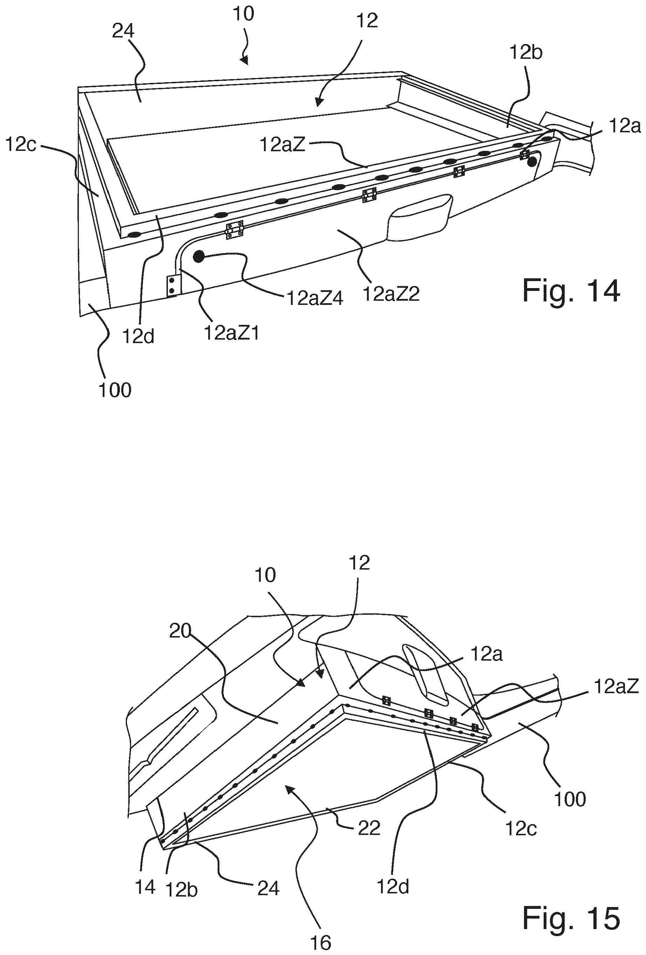

Figur 14 zeigt das Anbaumodul 10 aus Figur 13 in einer zweiten perspektivischen Darstellung. Anhand dieser Darstellung wird veranschaulicht, dass das Zusatzfach 12aZ über eine Außenseite des oberen Rahmenteils 12a über eine separate Zusatzfachöffnung 12aZ1 zugänglich sein kann. Weiterhin kann die Zusatzfachöffnung 12aZ1 mittels einer Zusatzfachklappe 12aZ2 verschließbar sein. Hierzu kann die Zusatzfachklappe 12aZ2 mittels mehrerer Zusatzfachscharniere 12aZ3 am Rahmen 12 schwenkbar befestigt sein und mittels einer Zusatzfachverschlussvorrichtung 12aZ4 am Rahmen 12 befestigt sein. Die Zusatzfachverschlussvorrichtung 12aZ4 kann beispielsweise zwei Push-Lock Schlösser wie abgebildet umfassen.

Aus den Abbildungen der Figuren 8 bis 14 geht insgesamt hervor, dass die Abmessungen des Anbaumoduls 10 gemäß der vorliegenden Offenbarung grundsätzlich den geometrischen Grenzen einer bestimmten Heckklappe 100 oder mehreren bestimmten Heckklappen unterworfen sind. Die Heckklappe, an welche das Anbaumodul 10 montierbar sein kann, ist jedenfalls nicht als Teil des Anbaumoduls 10 zu verstehen. Weiterhin können die Abmessungen des Anbaumoduls 10 auch geometrischen Grenzen von bestimmten Campingutensilien unterworfen sein, die im Anbaumodul 10 verstaut werden sollen.

Figur 15 zeigt eine Heckklappe 100 in einem geöffneten Zustand mit einem daran montierten Anbaumodul 10 gemäß der Variante aus den Figuren 13 und 14. Gleichwohl könnte an dieselbe Heckklappe 100 auch ein Anbaumodul 10 gemäß der Variante aus den Figuren 8-12 montiert sein oder eine Mischform der beiden Varianten.

Das an die Heckklappe 100 montierte Anbaumodul 10 weist einen Rahmen 12 auf, der fahrzeuginnenseitig an der Heckklappe 100 in einer Montageebene 14 befestigt ist und einen Stauraum 16 zumindest teilweise umschließt. Der Rahmen 12 ist dabei ausgebildet und eingerichtet, den Stauraum 16 in ein erstes Fach 20 und ein zweites Fach 22 zu unterteilen. Im zweiten Fach 22 befindet sind die Tischplatte 30, die gleichzeitig die Funktion einer Rückwand erfüllen kann. Das zweite Fach 22 kann hierbei durch die umlaufende Schiene 12d ausgebildet sein.

Der Rahmen 12 kann dabei ein oberes Rahmenteil 12a, ein linkes Rahmenteil 12b und ein rechtes Rahmenteil 12c aufweisen.

Ferner kann der Rahmen 12 des Anbaumoduls 10 ausgebildet und eingerichtet sein, im Stauraum 16 ein Zusatzfach 12aZ auszubilden, das über eine separate Zusatzfachöffnung 12aZ1 zugänglich sein kann. Weiterhin kann die Zusatzfachöffnung 12aZ1 mittels einer Zusatzfachklappe 12aZ2 verschließbar sein. Das Zusatzfach 12aZ kann dabei vollständig räumlich vom übrigen Stauraum 16 getrennt sein, wodurch ein Staufach bereitgestellt werden kann, das unabhängig vom übrigen Stauraum 16 zugänglich ist. Während das Zusatzfach 12aZ von oben am oberen Rahmenteil 12a zugänglich sein kann, kann der übrige Stauraum 16 von unten über die Klappe 24 zugänglich sein. Die Funktion der Klappe 24 ist dabei identisch wie in der Beschreibung zu den Figuren 8 bis 12 beschrieben.

### Bezuqszeichenliste

- 10: Anbaumodul
- 12: Rahmen
- 12a: oberes Rahmenteil
- 12a1: oberer Schenkel des oberen Rahmenteils
- 12a2: vorderer Schenkel des oberen Rahmenteils
- 12a3: konkave Außenkontur
- 12a4: Aussparung
- 12aZ: Zusatzfach
- 12aZ1: Zusatzfachöffnung
- 12aZ2: Zusatzfachklappe
- 12aZ3: Zusatzfachscharniere
- 12aZ4: Zusatzfachverschlussvorrichtung
- 12b: linkes Rahmenteil
- 12b1: erster Schenkel des U-förmigen Querschnitts des linken Rahmenteils
- 12b2: zweiter Schenkel des U-förmigen Querschnitts des linken Rahmenteils
- 12b3: Aussparung des linken Rahmenteils
- 12c: rechtes Rahmenteil
- 12c1: erster Schenkel des U-förmigen Querschnitts des rechten Rahmenteils
- 12c2: zweiter Schenkel des U-förmigen Querschnitts des rechten Rahmenteils
- 12c3: Aussparung des rechten Rahmenteils
- 12d: umlaufende Schiene
- 13: Befestigungsmittel
- 14: Montageebene
- 16: Stauraum
- 18: Wandprofil
- 20: erstes Fach
- 22: zweites Fach
- 24: öffenbare und verschließbare Klappe
- 26: Scharnierverbindung
- 28: Klappstuhl
- 30: Tischplatte
- 100: Heckklappe

## Patentansprüche

1. Anbaumodul (10) für eine Heckklappe (100) eines Fahrzeugs, insbesondere eines Campingfahrzeugs, aufweisend einen Rahmen (12), der fahrzeuginnenseitig an der Heckklappe (100) in einer Montageebene (14) befestigbar ist und einen Stauraum (16) zumindest teilweise umschließt,
**dadurch gekennzeichnet, dass**
der Rahmen (12) ausgebildet und eingerichtet ist, den Stauraum (16) in ein erstes Fach (20) und ein zweites Fach (22) zu unterteilen.

2. Anbaumodul (10) nach Anspruch 1, wobei der Rahmen (12) ein zum Stauraum (16) hin ausgebildetes Wandprofil (18) aufweist, das ausgebildet und eingerichtet ist, das erste Fach (20) als ein erstes Schubfach und/oder das zweite Fach (22) als ein zweites Schubfach zu definieren.

3. Anbaumodul (10) nach Anspruch 1 oder 2, wobei der Rahmen (12) so ausgebildet und eingerichtet ist, dass das erste und zweite Fach (20, 22) in Bezug auf die Montageebene (14) aufeinander angeordnet sind.

4. Anbaumodul (10) nach einem der vorherigen Ansprüche, wobei der Rahmen (12) ausgebildet ist, den Stauraum (16) von drei Seiten zu umschließen, wobei der Rahmen (12) ein oberes Rahmenteil (12a), ein linkes Rahmenteil (12b) und ein rechtes Rahmenteil (12c) aufweist, wobei vorzugsweise die linken und rechten Rahmenteile (12b, 12c) spielsymmetrisch ausgebildet sind.

5. Anbaumodul (10) nach Anspruch 4, wobei das linke und/oder das rechte Rahmenteil (12b, 12c) einen zum Stauraum (16) hin geöffneten U-förmigen Querschnitt aufweisen.

6. Anbaumodul (10) nach einem der Ansprüche 4 oder 5, wobei das linke und/oder das rechte Rahmenteil (12b, 12c) einen zur vierten, nicht vom Rahmen (12) umschlossenen Seite des Stauraums (16) hin einen vergrößernden Querschnitt aufweisen.

7. Anbaumodul (10) nach einem der Ansprüche 4 bis 6, wobei das obere Rahmenteil (12a) einen L-förmigen Querschnitt aufweist, wobei die Rahmenteile (12a-c) so ausgebildet und eingerichtet sind, dass das linke Rahmenteil (12b) und das rechte Rahmenteil (12c) mit dem oberen Rahmenteil (12a) fluchtend zusammensetzbar sind.

8. Anbaumodul (10) nach einem der Ansprüche 4 bis 7, wobei der Rahmen (12) weiter eine umlaufende Schiene (12d) aufweist, wobei die umlaufende Schiene (12d) vorzugsweise einen zum Stauraum (16) hin geöffneten U-förmigen Querschnitt aufweist.

9. Anbaumodul (10) nach einem der vorherigen Ansprüche 4 bis 8, wobei das linke, das rechte und/oder das obere Rahmenteil (12a-c) Befestigungsmittel (13) aufweisen, über die der Rahmen (12) in der Montageebene (14) an der Heckklappe (100) befestigbar ist.

10. Anbaumodul (10) nach einem der vorherigen Ansprüche, weiter umfassend eine öffenbare und verschließbare Klappe (24), die ausgebildet und eingerichtet ist, Zugang zum ersten Fach (20) und/oder zum zweiten Fach (22) herzustellen.

11. Anbaumodul (10) nach Anspruch 6, wobei die öffenbare und verschließbare Klappe (24) ausgebildet und eingerichtet ist, den Stauraum (16) in einem Bereich öffnen und schließen zu können, entlang dem der Stauraum (16) nicht vom Rahmen (12) umschlossen ist, wobei die Klappe (24) vorzugsweise eine Scharnierverbindung (26) aufweist, wobei die Scharnierverbindung (26) vorzugsweise am Rahmen (12) befestigt ist.

12. Anbaumodul (10) nach einem der vorherigen Ansprüche, wobei der Rahmen (12) zur Montageebene (14) abgewandten Seite hin offen ausgebildet ist, vorzugweise wobei das zweite Fach (22) des Rahmens (12) so ausgebildet und eingerichtet ist, dass eine im zweiten Fach (22) eingesetzte Tischplatte (30) die offene Seite des Rahmens (12) ganz oder teilweise schließt.

13. Anbaumodul (10) nach einem der vorherigen Ansprüche, wobei der Rahmen (12) weiterhin ausgebildet und eingerichtet ist, im Stauraum (16) ein Zusatzfach (12aZ) auszubilden, das über eine separate Zusatzfachöffnung (12aZ1) zugänglich ist, wobei die die Zusatzfachöffnung (12aZ1) vorzugsweise mittels einer Zusatzfachklappe (12aZ2) verschließbar ist.

14. Anbaumodul (10) nach einem der vorherigen Ansprüche, weiter umfassend einen oder zwei Klappstühle (28), die ausgebildet und eingerichtet sind, in das erste Fach (20) eingesetzt und herausgenommen zu werden, und eine Tischplatte (30), die ausgebildet und eingerichtet ist, in das zweite Fach (22) eingesetzt und herausgenommen zu werden.

15. Heckklappe (100), umfassend ein Anbaumodul (10) nach einem der vorstehenden Ansprüche 1 bis 14, wobei die Heckklappe (100) vorzugsweise ausgebildet und eingerichtet ist, nach oben und/oder oder zur Seite schwenkbar geöffnet zu werden.
